# EUROPEAN PATENT SPECIFICATION

(11) **EP 2 786 881 B1**
(45) Date of publication and mention of the grant of the patent: **27.06.2018**
(21) Application number: 14160972.7
(22) Date of filing: 20.03.2014
(51) Int. Cl.: B60C 17/00

(54) **Run flat tire**
Reifen mit Notlaufeigenschaften
Pneu de roulage à plat

(30) Priority: 02.04.2013 JP 2013077058
(43) Date of publication of application: 08.10.2014
(73) Proprietor: Sumitomo Rubber Industries, Ltd., Hyogo-ken (JP)
(72) Inventor: Sagawa, Takamichi, Kobe-shi, Hyogo-ken, 651-0072 (JP)
(74) Representative: Manitz Finsterwald Patentanwälte PartmbB

(56) References cited:
- EP-A1- 0 005 399
- JP-A- 2004 306 774
- JP-A- 2008 162 137

## Description

### Background of the invention

The present invention relates to a pneumatic tire, more particularly to a run flat tire provided on the inside of the carcass with a sidewall-reinforcing rubber composed of a large number of windings of a narrow-width long rubber strip.

Japanese Patent Application Publication No. JP-A-2004-306774 discloses a run flat tire in accordance with the preamble of claim 1 whose sidewall portion is provided on the axially inside of the carcass with a crescent-shaped reinforcing rubber which is made up of an axially inside rubber layer having a JIS durometer type A hardness of 65 to 100 degrees and an axially outside rubber layer having a JIS durometer type A hardness of not less than 45 degrees and lower than that of the axially inside rubber layer, and the difference therebetween is 5 to 55 degrees.

Japanese Patent Application Publication No. JP-A-2008-162137 discloses a run flat tire in which the inside of the carcass is covered with an inner liner, and
the sidewall portion is provided on the axially inside of the inner liner with a crescent-shaped reinforcing rubber which is formed by winding narrow-width rubber strips so that the axially innermost surface layer portion facing the tire cavity is composed of windings of a rubber strip whose edges are spliced, and
an axially outer layer portion between the axially innermost surface layer portion and the inner liner is composed of windings of a rubber strip which are largely overlapped.

If a sidewall-reinforcing rubber having a two-layered structure in which the axially inside layer and outside layer have different properties, e.g. hardness, modulus and the like or different rubber compositions, is formed by winding narrow-width rubber strips, since a large number of interfaces between the windings of the rubber strips exist at the interface between the inside layer and outside layer, a large stress is liable to concentrate on the interfaces between the windings during run-flat traveling, and it becomes difficult to improve the durability of the tire during run-flat traveling.

### Summary of the Invention

It is therefore, an object of the present invention to provide a run flat tire in which the durability of the tire during run-flat traveling is improved despite the sidewall-reinforcing rubber having a layered structure and composed of a large number of windings of rubber strips.

According to the present invention, a run flat tire comprises a tread portion, a pair of sidewall portions, a pair of bead portions each with a bead core, a carcass extending between the bead portions through the tread portion and the sidewall portions, and a crescent-shaped sidewall-reinforcing rubber disposed inside the carcass in each of the sidewall portions, and comprising an outside reinforcing rubber part on the carcass side and an inside reinforcing rubber part abutting on the axially inside of the outside reinforcing rubber part,
the inside reinforcing rubber part composed of a number of spiral windings of a rubber strip, wherein the rubber strip forming an axially outermost surface layer is spirally wound at first spiral pitches, the rubber strip forming an axially inner layer on the axially inside of the axially outermost surface layer is spirally wound at second spiral pitches, and the first spiral pitches are larger than the second spiral pitches,
the outside reinforcing rubber part composed of a number of windings of a rubber strip, wherein the rubber strip forming an axially innermost surface layer is spirally wound at third spiral pitches, the rubber strip forming an axially outer layer on the axially outside of the axially innermost surface layer is spirally wound at fourth spiral pitches, and the third spiral pitches are larger than the fourth spiral pitches,

The rubber strip forming the inside reinforcing rubber part and the rubber strip forming the outside reinforcing rubber part have different rubber compositions.

The above-mentioned first spiral pitches of the rubber strip forming the axially outermost surface layer of the inside reinforcing rubber part are 0.5 to 0.8 times the width of the rubber strip, and the above-mentioned third spiral pitches of the rubber strip forming the axially innermost surface layer of the outside reinforcing rubber part are 0.5 to 0.8 times the width of the rubber strip

The run flat tire may be provided with the following features:
(1) in the inside reinforcing rubber part, the rubber strip forming an axially innermost surface layer is spirally wound at spiral pitches which are larger than those of the rubber strip forming an axially outer layer on the axially outside of the axially innermost surface layer;
(2) the width of the rubber strip is in a range of from 5 to 30 mm;
(3) the hardness of the rubber of the inside reinforcing rubber part is 60 to 100 degrees, the hardness of the rubber of the outside reinforcing rubber part is not less than 45 degrees and smaller than the hardness of the rubber of the inside reinforcing rubber part, and the difference therebetween is 5 to 55 degrees.

Therefore, at the interface between the inside reinforcing rubber part and the outside reinforcing rubber part of the sidewall-reinforcing rubber, the number of the interfaces between the windings of the rubber strips is decreased. Accordingly, the durability of the sidewall-reinforcing rubber is improved, and the durability of the tire during run-flat traveling can be improved.

In this application including specification and claims, the term "hardness" of rubber refers to a durometer type A hardness measured according to JIS-K6253 at a temperature of 23 deg.c unless otherwise noted.

Further, in this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The standard wheel rim is a wheel rim officially approved or recommended for the tire by standards organizations, i.e. JATMA (Japan and Asia), T&RA (North America), ETRTO (Europe), TRAA (Australia),STRO (Scandinavia), ALAPA (Latin America), ITTAC (India) and the like which are effective in the area where the tire is manufactured, sold or used. For example, the standard wheel rim is the "standard rim" specified in JATMA, the "Measuring Rim" in ETRTO, the "Design Rim" in TRA or the like. The standard pressure is the maximum air pressure for the tire specified together with the maximum tire load by the same organization in the Air-pressure/Maximum-load Table or similar list. For example, the standard pressure is the "maximum air pressure" in JATMA, the "Inflation Pressure" in ETRTO, the maximum pressure given in the "Tire Load Limits at Various Cold Inflation Pressures" table in TRA or the like.

### Brief Description of the Drawings

Fig.1 is a cross sectional view of a run flat tire as an embodiment of the present invention.
Fig.2 is an enlarged cross sectional view of the sidewall portion thereof.
Fig.3 is a perspective partial view of the run flat tire.
Figs.4(A)-4(C) are diagrams showing manufacturing processes of the inside reinforcing rubber part.
Figs.5(A)-5(B) are diagrams showing manufacturing processes of the outside reinforcing rubber part.

### Description of the Preferred Embodiments

Embodiments of the present invention will now be described in detail in conjunction with accompanying drawings.

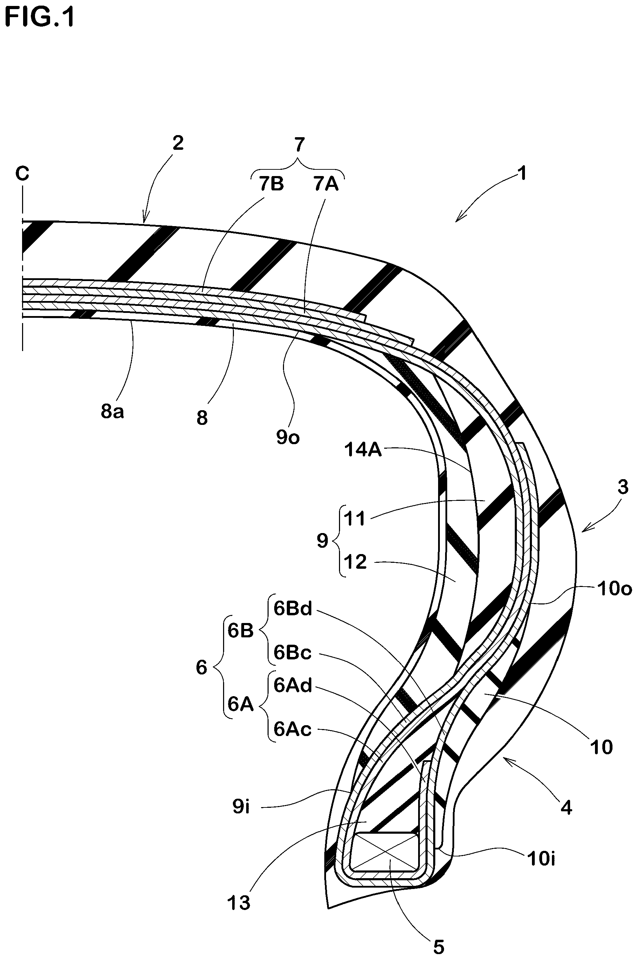

As shown in Fig.1, run flat tire 1 according to the present invention comprises a tread portion 2, a pair of sidewall portions 3, a pair of bead portions 4 each with a bead core 5 therein, a carcass 6 extending between the bead portions 4 through the tread portion 2 and the sidewall portions 3, a tread reinforcing belt 7 disposed radially outside the carcass 6 in the tread portion, and an inner liner 8 disposed on the inside of the carcass 6 to define the tire inner surface 8a facing the tire cavity or hollow.

The sidewall portions 3 are each provided on the inside of the carcass 6 with a sidewall-reinforcing rubber 9.

The bead portions 4 are each provided on the outside of the carcass 6 with a bead-reinforcing rubber 10.

In this embodiment, the tire 1 is designed for passenger cars.

The carcass 6 comprises at least one ply (in this embodiment two plies 6A and 6B) of cords arranged radially at an angle of 90 to 70 degrees with respect to the tire equator, and extending between the bead portions through the tread portion and sidewall portions, and turned up around the bead core in each bead portion from the inside to the outside of the tire so as to form a pair of turned up portions and one main portion therebetween. The inner carcass ply 6A has the main portion 6Ac and turned up portions 6Ad. The outer carcass ply 6B has the main portion 6Bc and turned up portions 6Bd. As to the carcass cords, an organic fiber carcass cord is used in this embodiment. The belt 7 comprises at least one ply (in this embodiment two cross plies 7A and 7B) of parallel cords laid at an angle of from 10 to 40 degrees with respect to the tire equator C. As to the belt cords, steel cords and high-modulus organic fiber cords, e.g. aramid, rayon and the like can be used.

The inner liner 8 extends between the bead portions 4 so as to cover the substantially entirety of the inner surface 8a of the tire facing the tire cavity or hollow. The inner liner 8 is made of an air-impermeable rubber compound. For example, preferably used is a butyl base rubber compound comprising at least 50 parts by mass of butyl rubber or halogenated butyl rubber with respect to 100 parts by mass of the rubber polymer.

The bead portions 4 are each provided between the main portion 6Bc of the outer ply 6B and the turned up portion 6Bd with a bead apex rubber 13 extending radially outwardly from the bead core 5 in a tapered manner to provide bending rigidity for the bead portion 4.
For that purpose, the bead apex rubber 13 is made of a hard rubber which preferably has a hardness of from 60 to 95 degrees.

The bead-reinforcing rubber 10 in each bead portion 4 is disposed along the axially outside of the carcass 6 and extends continuously in the tire circumferential direction. The thickness of the bead-reinforcing rubber 10 measured normally to the outer surface of the turned up portion 6bd is gradually decreased from its midportion toward its radially inner end 10i and toward its radially outer end 10o.
The radially inner end 10i of the bead-reinforcing rubber 10 is positioned radially inside the radially inner end of the bead apex rubber 13 and radially outside the radially inner end of the bead core 5.
The radially outer end 10o of the bead-reinforcing rubber 10 is positioned radially outside the radially outer end of the bead apex rubber 13 and radially inside a radial position at which the thickness of the sidewall-reinforcing rubber 9 becomes its maximum.
The bead-reinforcing rubber 10 is disposed so as to overlap with the sidewall-reinforcing rubber 9 and the bead apex rubber 13 in order to increase the bending rigidity of the bead portion 4 smoothly from the sidewall portion to the bead portion and thereby to effectively reduce the vertical deflection of the tire during run-flat traveling.
In order to effectively derive this advantageous effect, it is desirable that the bead-reinforcing rubber 10 has a hardness of from 60 to 100 degrees and preferably higher (harder) than the bead apex 13.

The sidewall-reinforcing rubber 9 is disposed on the axially inside of the carcass 6 and extends continuously in the tire circumferential direction.
The thickness of the sidewall-reinforcing rubber 9 measured normally to the inner surface of the main portion 6Ac of the inner ply 6A is gradually decreased from its midportion towards its radially inner end 9i and also towards its radially outer end 9o, and the cross sectional shape thereof is a crescent shape.

The radially inner end 9i of the sidewall-reinforcing rubber 9 is positioned radially inside the radially outer end of the bead apex rubber 13 and radially outside the bead core 5. The radially outer end 9o of the sidewall-reinforcing rubber 9 is positioned axially inside the axially outer end of the belt 7. The sidewall-reinforcing rubber 9 is provided to increase the bending rigidity of the sidewall portion 3 and thereby to effectively reduce the vertical deflection of the tire during run-flat traveling.

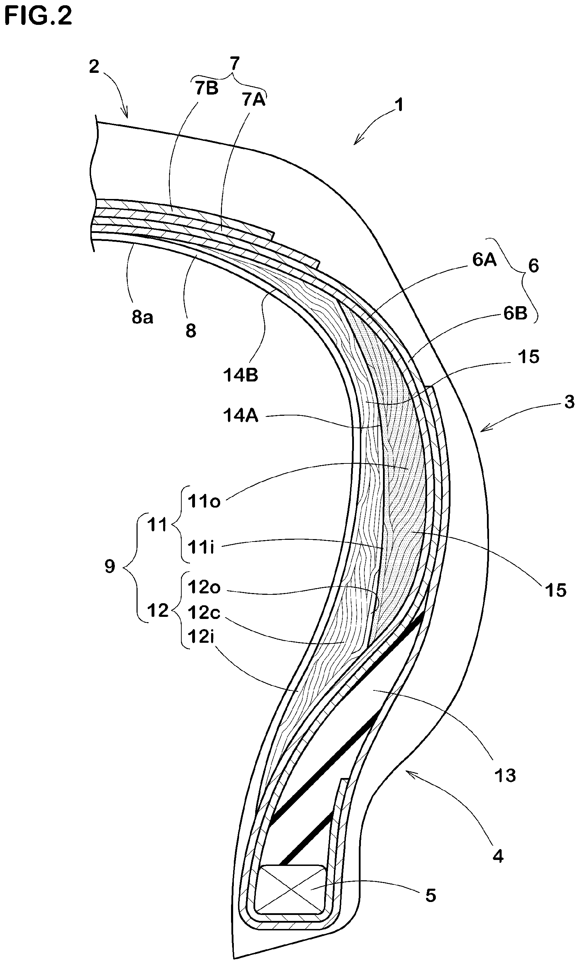

As shown in Fig.1 and Fig.2, the sidewall-reinforcing rubber 9 is composed of
an axially outside reinforcing rubber part 11 disposed on the carcass 6 side, and
an axially inside reinforcing rubber part 12 disposed on the tire cavity side and abutting on the axially inner surface of the outside reinforcing rubber part 11, defining an interface 14A therebetween.

Each of the inside reinforcing rubber part 12 and outside reinforcing rubber part 11 is formed by circumferentially, spirally winding one narrow-width rubber strip 15 so that the windings of the rubber strip are stacked in the tire radial direction (in the manufacturing process, stacked generally in a lateral direction).
That is, each rubber part 11, 12 is composed of a large number of overlapped windings of the rubber strip 15. As the sidewall-reinforcing rubber 9 is manufactured by so-called strip winding method, the cross-sectional shape, sizes and the like can be flexibly changed according to the tires to be manufactured, without the need for various extruding dies and a large-sized extruder.

The rubber strip 15 of the inside reinforcing rubber part 12 and the rubber strip 15 of the outside reinforcing rubber part 11 have different rubber compositions from each other.

It is preferable that the rubber composition of the outside reinforcing rubber part 11 contains a less amount of a reinforcing filler such as carbon black and silica when compared with that of the inside reinforcing rubber part 12 so that the sidewall-reinforcing rubber 9 has the relatively hard inside reinforcing rubber part 12 and the relatively soft outside reinforcing rubber part 11.
Such sidewall-reinforcing rubber 9 can increase the durability of the sidewall portion during run-flat traveling and improve the ride comfort during normal traveling.

The hardness of the inside reinforcing rubber part 12 is preferably set in a range of from 60 to 100 degrees to provide durability for the sidewall-reinforcing rubber 9, and the hardness of the outside reinforcing rubber part 11 is preferably set to be not less than 45 degrees and less than the hardness of the inside reinforcing rubber part 12 not to deteriorate ride comfort. Preferably, the difference therebetween is 5 to 55 degrees.

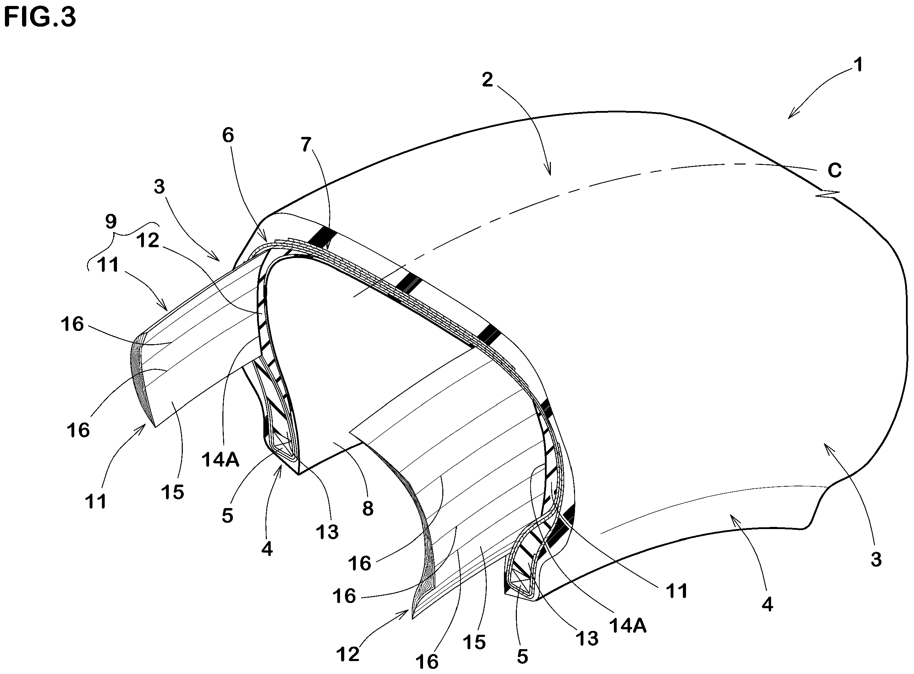

As the rubber strips are overlap wound, on the surface of each of the inside reinforcing rubber part 12 and outside reinforcing rubber part 11, interfaces 16 between the windings of the rubber strip 15 appear as shown in Figs.2 and 3.

Meanwhile, each of the inside reinforcing rubber part 12 and outside reinforcing rubber part 11 comprises a plurality of layers.

Here, the term "layer" means a layer formed by an aggregate of windings of the rubber strip 15 which is spirally wound while moving toward one direction (which is, in the finished tire, a radially inward direction or a radially outward direction / in the manufacturing process, may be one lateral direction).
Thus, for example, if the rubber strip 15 shuttles during being wound, two layers are formed.

As shown in Fig.2, the outside reinforcing rubber part 11 comprises an axially innermost surface layer 11i abutting on the inside reinforcing rubber part 12, and at least one axially outer layer 11o on the axially outside thereof.

In this embodiment, the above-mentioned at least one axially outer layer 11o is the single axially outermost surface layer. But, it is also possible that the above-mentioned at least one axially inner layer is
an axially outer layer 11o on the axially outside of the axially innermost surface layer 11i and
an axially outermost surface layer (not shown) on the axially outside thereof.

In the outside reinforcing rubber part 11 in the tire meridian section, the spiral pitches of the rubber strip 15 forming the axially innermost surface layer 11i are larger than the spiral pitches of the rubber strip 15 forming the axially outer layer 11o.
In the later example of a three-layered structure, the spiral pitches of the rubber strip 15 forming the axially outermost surface layer are more than the spiral pitches of the rubber strip 15 forming the axially inner layer 11o adjacent thereto.

The inside reinforcing rubber part 12 comprises an axially outermost surface layer 12o abutting on the outside reinforcing rubber part 11, and at least one axially inner layer on the axially inside thereof.
In this embodiment, the above-mentioned at least one axially inner layer is
an axially innermost surface layer 12i and
a middle layer 12c between the two surface layers 12o and 12i.

In the inside reinforcing rubber part 12 in the tire meridian section, the spiral pitches of the rubber strip 15 forming the axially outermost surface layer 12o are larger than the spiral pitches of the rubber strip 15 forming the middle layer 12c.

In such sidewall-reinforcing rubber 9, therefore, the number of the interfaces 16 between the windings of the rubber strip 15 appearing in the interface 14A between the inside reinforcing rubber part 12 and the outside reinforcing rubber part 11, is decreased. Accordingly, separation failures due to the difference between the rubber compositions can be effectively prevented, therefore, the durability of the tire during run-flat traveling can be improved.

In the inside reinforcing rubber part 12 in the tire meridian section, the spiral pitches of the rubber strip 15 forming the axially innermost surface layer 12i are larger than the spiral pitches of the rubber strip 15 forming the middle layer 12c.
Therefore, the number of the interfaces 16 appearing in the interface 14B between the inside reinforcing rubber part 12 and the inner liner 8 is decreased. This helps to further improve the durability of the tire during run-flat traveling.

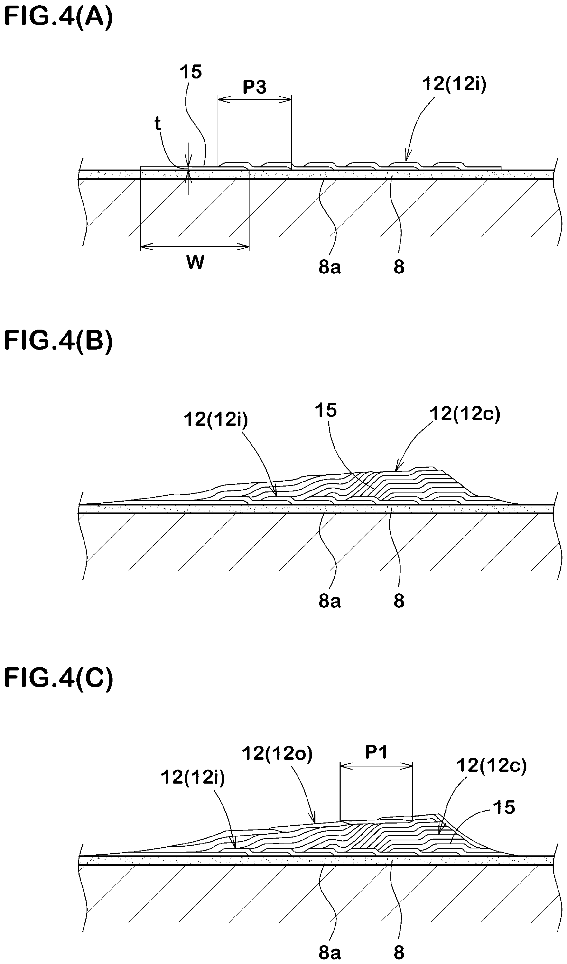

Figs.4(A)-4(C) show processes of manufacturing the inside reinforcing rubber part 12 of the raw tire.
Fig.4(A) shows the process of manufacturing the axially innermost surface layer 12i.
Fig.4(B) shows the process of manufacturing the middle layer 12c.
Fig.4(C) shows the process of manufacturing the axially outermost surface layer 12o.

Briefly, the sidewall-reinforcing rubber 9 is formed by overlap winding the rubber strips 15 along and on the outer surface of the inner liner 8 of the raw tire previously applied on a tire building drum as shown in Fig.4(A)-Fig.4(C). The carcass 6, rubber members and the like are applied to the outside of the sidewall-reinforcing rubber 9 to make the raw tire. Then, the raw tire is vulcanized as usual.

As shown in Fig.4(A), the axially innermost surface layer 12i of the inside reinforcing rubber part 12 is formed by spirally winding the rubber strip 15 from the radially outside to the inside of the tire (in a direction from left to right in the figure) along and on the outside of the inner liner 8. In the axially innermost surface layer 12i, the rubber strip 15 is wound at spiral pitches P3 which are preferably in a range of from 0.5 to 0.8 times, more preferably 0.6 to 0.7 times the width w of the rubber strip 15.

As shown in Fig.4(B), the middle layer 12c of the inside reinforcing rubber part 12 is formed by spirally winding the rubber strip 15 from the radially inside to the outside of the tire (in a direction from right to left in the figure) along and on the outside of the axially innermost surface layer 12i. In the middle layer 12c, the rubber strip 15 is wound at spiral pitches which are preferably in a range of from 0.2 to 0.4 times the width w of the rubber strip 15.

As shown in Fig.4(C), the axially outermost surface layer 12o of the inside reinforcing rubber part 12 is formed by spirally winding the rubber strip 15 from the radially outside to the inside of the tire (in a direction from left to right in the figure) along and on the outside of the middle layer 12c. In the axially outermost surface layer 12o, the rubber strip 15 is wound at spiral pitches P1 which are preferably in a range of from 0.5 to 0.8 times, more preferably 0.6 to 0.7 times the width w of the rubber strip 15.

If the ratio P1/W is less than 0.5, there is a possibility that the number of the interfaces 16 can not be effectively decreased in the axially outermost surface layer 12o of the inside reinforcing rubber part 12.

If the ratio P1/W is more than 0.8, as the overlap between the windings of the rubber strip 15 decreases, there is a possibility that the windings of the rubber strip 15 are separated from each other at their interface 16.

The layers 12i, 12c and 12o of the inside reinforcing rubber part 12 are successively formed by winding the continuous rubber strip 15 in view of the production efficiency. But, it may be also possible to form the layers by winding two or more separated same kind of rubber strips 15.

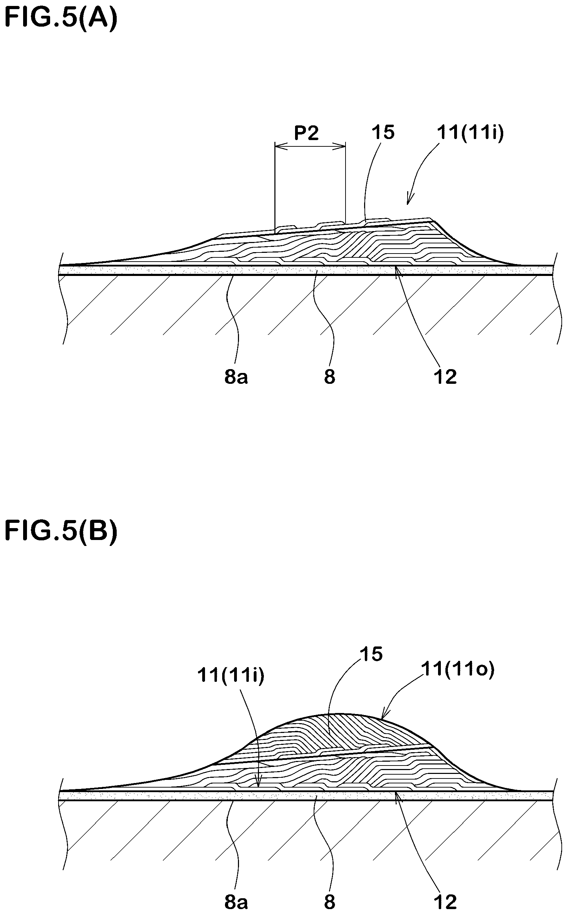

Figs.5(A)-5(B) show processes of manufacturing the outside reinforcing rubber part 11 of the raw tire.
Fig.5(A) shows the process of manufacturing the axially innermost surface layer 11i,
Fig.5(B) shows the process of manufacturing the axially outermost surface layer 11o.

As shown in Fig.5(A), the innermost surface layer 11i of the outside reinforcing rubber part 11 is formed by spirally winding the rubber strip 15 from the radially inside to the outside of the tire (in a direction from right to left in the figure) along and on the outside of the inside reinforcing rubber part 12.
In the innermost surface layer 11i, the rubber strip 15 is wound at spiral pitches P2 which are preferably in a range of from 0.5 to 0.8 times, more preferably 0.6 to 0.7 times the width w of the rubber strip 15 for similar reasons to the pitches P1.

As shown in Fig.5(B), the axially outermost surface layer 11o of the outside reinforcing rubber part 11 is formed by spirally winding rubber strip 15 from the radially outside to the inside of the tire (in a direction from left to right in the figure) along and on the outside of the innermost surface layer 11i.
In the axially outermost surface layer 11o, the rubber strip 15 is wound at spiral pitches which are preferably in a range of from 0.2 to 0.4 times the width w of the rubber strip 15.

The layers 11i and 11o of the outside reinforcing rubber part 11 are successively formed by winding the continuous rubber strip 15 in view of the production efficiency.
But, it may be also possible to form the layers by winding two or more separated same kind of rubber strips 15.

By connecting the rubber strip 15 for forming the inside reinforcing rubber part 12 and the rubber strip 15 for forming the outside reinforce rubber part 11 into one strip, and then winding such strip, the inside reinforcing rubber part 12 and the outside reinforcing rubber part 11 can be manufactured continuously. Thus, the production efficiency may be remarkably improved.

The rubber strip 15 may be continuously formed by the use of an apparatus comprising a rubber extruder (not shown) and supplied to a winding apparatus (not shown).

For example, the width w of the rubber strip 15 is set in a range of from 5 to 30 mm, preferably 5 to 20 mm. If the width w is less than 5 mm, it is difficult to decrease the number of the interfaces 16 appearing on the surface layers. If the width W is more than 30 mm, it becomes difficult to wind the rubber strip into an intended cross sectional shape desirable for the sidewall-reinforcing rubber 9.

For example, the thickness t of the rubber strip 15 is set in a range of from 0.5 to 2.0 mm, preferably 0.5 to 1.0 mm. If the thickness t is less than 0.5 mm, there is a possibility that the production efficiency of the sidewall-reinforcing rubber 9 is decreased. If thickness t is more than 2.0 mm, it becomes difficult to wind the rubber strip into an intended cross sectional shape desirable for the sidewall-reinforcing rubber 9.

### Comparison Tests

Based on the structure shown in Figs.1 to 3, run flat tires of size 245/40R18 (rim size: 8J) for passenger car were manufactured and tested as follows.

The widths W and thicknesses of the rubber strips were 20 mm and 1 mm, respectively.
The spiral pitches of the rubber strip forming the middle layer of the inside reinforcing rubber part was approximately 0.4 times the width the rubber strip.
The spiral pitches of the rubber strip forming the axial outer layer of the outside reinforcing rubber part was approximately 0.4 times the width of the rubber strip.
The spiral pitches P1 and P2 are shown in Table 1.

### < Run flat durability test >

The test tire was mounted on a wheel rim and the valve core was removed to release air. Then, the tire was subjected to an indoor wheel test prescribed by the Procedure for Load/Speed Performance Tests of the Economic commission for Europe (ECE-30). In the test, the rotational speed of the tire was increased stepwise, and the speed at which any failure occurred was measured. The results are shown in Table 1 by an index based on Comparative example Ref.1 being 100. The larger the value, the better the run flat durability.

**Table 1**

| Tire | Ref.1 | Ref. 2 | Ref. 3 | Ex.1 | Ex.2 | Ex. 3 | Ex.4 | Ex. 5 |
|---|---|---|---|---|---|---|---|---|
| P1/W | 0.30 | 0.50 | 0.90 | 0.50 | 0.65 | 0.80 | 0.65 | 0.65 |
| P2/W | 0.30 | 0.30 | 0.30 | 0.65 | 0.65 | 0.65 | 0.50 | 0.80 |
| run flat durability | 100 | 105 | 105 | 120 | 125 | 130 | 125 | 125 |

As shown in Table 1, the run flat tires according to the present invention can be improved in the durability during run-flat traveling.

## Claims

1. A run flat tire (1) comprising
a tread portion (2),
a pair of sidewall portions (3),
a pair of bead portions (4) each with a bead core (5),
a carcass (6) extending between the bead portions (4) through the tread portion (2) and the sidewall portions (3), and
a crescent-shaped sidewall-reinforcing rubber (9) disposed inside the carcass (6) in each said sidewall portion (3), and comprising an outside reinforcing rubber part (11) on the carcass side and an inside reinforcing rubber part (12) abutting on the axially inside thereof,
**characterized in that**
the inside reinforcing rubber part (12) is composed of a number of spiral windings of a rubber strip (15), wherein the rubber strip (15) forming an axially outermost surface layer (12o) is spirally wound at first spiral pitches (P1), the rubber strip (15) forming an axially inner layer (12c, 12i) on the axially inside of the axially outermost surface layer (12o) is spirally wound at second spiral pitches (P3), and the first spiral pitches (P1) are larger than the second spiral pitches (P3), and
the outside reinforcing rubber part (11) is composed of a number of windings of a rubber strip (15), wherein the rubber strip (15) forming an axially innermost surface layer (11i) is spirally wound at third spiral pitches (P2), the rubber strip (15) forming an axially outer layer (11o) on the axially outside of the axially innermost surface layer (11i) is spirally wound at fourth spiral pitches, and the third spiral pitches (P3) are larger than the fourth spiral pitches,
wherein the rubber strip (15) forming the inside reinforcing rubber part (12) and the rubber strip (15) forming the outside reinforcing rubber part (11) have different rubber compositions, and wherein
said first spiral pitches (P1) of the rubber strip (15) forming the axially outermost surface layer (12o) of the inside reinforcing rubber part (12) are 0.5 to 0.8 times the width (w) of the rubber strip (15), and
said third spiral pitches (P2) of the rubber strip (15) forming the axially innermost surface layer (11i) of the outside reinforcing rubber part (11) are 0.5 to 0.8 times the width (w) of the rubber strip (15).

2. The run flat tire (1) according to claim 1, wherein in the inside reinforcing rubber part (12), the rubber strip (15) forming an axially innermost surface layer (12i) is spirally wound at spiral pitches which are larger than those of the rubber strip (15) forming an axially outer layer (12c) on the axially outside of the axially innermost surface layer (12i).

3. The run flat tire (1) according to claim 1 or 2, wherein the width (w) of the rubber strip (15) is in a range of from 5 to 30 mm.

4. The run flat tire (1) according to any one of claims 1-3, wherein
the durometer type A hardness of the rubber measured at 23 °C according to JIS-K6253 of the inside reinforcing rubber part (12) is 60 to 100 degrees,
the durometer type A hardness of the rubber measured at 23 °C according to JIS-K6253 of the outside reinforcing rubber part (11) is not less than 45 degrees and smaller than the hardness of the rubber of the inside reinforcing rubber part (12), and the difference therebetween is 5 to 55 degrees.

## Patentansprüche

1. Notlaufreifen (1), umfassend
einen Laufflächenabschnitt (2),
ein Paar Seitenwandabschnitte (3),
ein Paar Wulstabschnitte (4), jeweils mit einem Wulstkern (5), eine Karkasse (6), die sich zwischen den Wulstabschnitten (4) durch den Laufflächenabschnitt (2) und die Seitenwandabschnitte (3) erstreckt, und
einen sichelförmigen Seitenwandverstärkungskautschuk (9), der innerhalb der Karkasse (6) in jedem Seitenwandabschnitt (3) angeordnet ist und einen außenseitigen Verstärkungskautschukteil (11) auf der Karkassseite und einen innenseitigen Verstärkungskautschukteil (12), der an seiner axialen Innenseite anliegt, umfasst,
**dadurch gekennzeichnet, dass**
der innenseitige Verstärkungskautschukteil (12) aus einer Anzahl von Spiralwicklungen eines Kautschukstreifens (15) zusammengesetzt ist, wobei der Kautschukstreifen (15), der eine axial äußerste Oberflächenschicht (12o) bildet, mit ersten Spiralensteigungen (P1) spiralförmig gewickelt ist, der Kautschukstreifen (15), der eine axial innere Schicht (12c, 12i) auf der axialen Innenseite der axial äußersten Oberflächenschicht (12o) bildet, mit zweiten Spiralensteigungen (P3) spiralförmig gewickelt ist, und die ersten Spiralensteigungen (P1) größer sind als die zweiten Spiralensteigungen (P3), und
der außenseitige Verstärkungskautschukteil (11) aus einer Anzahl von Wicklungen eines Kautschukstreifens (15) zusammengesetzt ist, wobei der Kautschukstreifen (15), der eine axial innerste Oberflächenschicht (11i) bildet, mit dritten Spiralensteigungen (P2) spiralförmig gewickelt ist, der Kautschukstreifen (15), der eine axial äußere Schicht (11o) auf der axialen Außenseite der axial innersten Oberflächenschicht (11i) bildet, mit vierten Spiralensteigungen spiralförmig gewickelt ist, und die dritten Spiralensteigungen (P3) größer sind als die vierten Spiralensteigungen,
wobei der Kautschukstreifen (15), der den innenseitigen Verstärkungskautschukteil (12) bildet, und der Kautschukstreifen (15), der den außenseitigen Verstärkungskautschukteil (11) bildet, unterschiedliche Kautschukzusammensetzungen aufweisen, und wobei
die ersten Spiralensteigungen (P1) des Kautschukstreifens (15), der die axial äußerste Oberflächenschicht (12o) des innenseitigen Verstärkungskautschukteils (12) bildet, das 0,5- bis 0,8-fache der Breite (W) des Kautschukstreifens (15) betragen, und
die dritten Spiralensteigungen (P2) des Kautschukstreifens (15), der die axial innerste Oberflächenschicht (11i) des außenseitigen Verstärkungskautschukteils (11) bildet, das 0,5- bis 0,8-fache der Breite (W) des Kautschukstreifens (15) betragen.

2. Notlaufreifen (1) nach Anspruch 1,
wobei in dem innenseitigen Verstärkungskautschukteil (12) der Kautschukstreifen (15), der eine axial innerste Oberflächenschicht (12i) bildet, mit Spiralensteigungen spiralförmig gewickelt ist, die größer sind als jene des Kautschukstreifens (15), der eine axiale äußere Schicht (12c) auf der axialen Außenseite der axial innersten Oberflächenschicht (12i) bildet.

3. Notlaufreifen (1) nach Anspruch 1 oder 2,
wobei die Breite (W) des Kautschukstreifens (15) in einem Bereich von 5 bis 30 mm liegt.

4. Notlaufreifen (1) nach einem der Ansprüche 1 bis 3,
wobei die Durometer-Typ-A-Härte des Kautschuks, bei 23°C gemäß JIS-K6253 gemessen, des innenseitigen Verstärkungskautschukteils (12) 60 bis 100 Grad beträgt,
die Durometer-Typ-A-Härte des Kautschuks, bei 23°C gemäß JIS-K6253 gemessen, des außenseitigen Verstärkungskautschukteils (11) nicht geringer ist als 45 Grad und kleiner ist als die Härte des Kautschuks des innenseitigen Verstärkungskautschukteils (12), und die Differenz dazwischen 5 bis 55 Grad beträgt.

## Revendications

1. Pneumatique pour roulage à plat (1) comprenant
une portion formant bande de roulement (2),
une paire de portions formant parois latérales (3),
une paire de portions formant talon (4) ayant chacune une âme de talon (5),
une carcasse (6) s'étendant entre les portions formant talon (4) à travers la portion formant bande de roulement (2) et les portions formant parois latérales (3), et
un caoutchouc de renfort latéral en forme de croissant (9) disposé à l'intérieur de la carcasse (6) dans chacune desdites portions formant parois latérales (3), et comprenant une partie en caoutchouc de renfort extérieure (11) sur le côté de la carcasse et une partie en caoutchouc de renfort intérieure (12) en butée contre la partie axialement intérieure de celle-ci,
**caractérisé en ce que**
la partie en caoutchouc de renfort intérieure (12) est composée d'un certain nombre d'enroulements en spirale d'une bande de caoutchouc (15), dans lequel la bande de caoutchouc (15) formant une couche de surface axialement la plus extérieure (12o) est enroulée en spirale sous des premiers pas de spirale (P1), la bande de caoutchouc (15) formant une couche axialement intérieure (12c, 12i) sur la partie axialement intérieure de la couche de surface axialement la plus extérieure (12o) est enroulée en spirale sous des deuxièmes pas de spirale (P3), et les premiers pas de spirale (P1) sont plus grands que les deuxièmes pas de spirale (P3), et
la partie en caoutchouc de renfort extérieure (11) est composée d'un certain nombre d'enroulements d'une bande de caoutchouc (15), dans lequel la bande de caoutchouc (15) formant une couche de surface axialement la plus intérieure (11i) est enroulée en spirale sous des troisièmes pas de spirale (P2), la bande de caoutchouc (15) formant une couche axialement extérieure (11o) sur la partie axialement extérieure de la couche de surface axialement la plus intérieure (11i) est enroulée en spirale sous des quatrièmes pas de spirale, et les troisièmes pas de spirale (P3) sont plus grands que les quatrièmes pas de spirale,
dans lequel la bande de caoutchouc (15) formant la partie en caoutchouc de renfort intérieure (12) et la bande de caoutchouc (15) formant la partie en caoutchouc de renfort extérieure (11) ont des compositions de caoutchouc différentes, et dans lequel
lesdits premiers pas de spirale (P1) de la bande de caoutchouc (15) formant la couche de surface axialement la plus extérieure (12o) de la partie en caoutchouc de renfort intérieure (12) sont de 0,5 à 0,8 fois la largeur (W) de la bande de caoutchouc (15), et
lesdits troisièmes pas de spirale (P2) de la bande de caoutchouc (15) formant la couche de surface axialement la plus intérieure (11i) de la partie en caoutchouc de renfort extérieure (11) sont de 0,5 à 0,8 fois la largeur (W) de la bande de caoutchouc (15).

2. Pneumatique pour roulage à plat (1) selon la revendication 1, dans lequel, dans la partie en caoutchouc de renfort intérieure (12), la bande de caoutchouc (15) formant une couche de surface axialement la plus intérieure (12i) est enroulée en spirale sous des pas de spirale qui sont plus grands que ceux de la bande de caoutchouc (15) formant une couche axialement extérieure (12c) sur la partie axialement extérieure de la couche de surface axialement la plus intérieure (12i).

3. Pneumatique pour roulage à plat (1) selon la revendication 1 ou 2, dans lequel la largeur (W) de la bande de caoutchouc (15) est dans une plage allant de 5 à 30 mm.

4. Pneumatique pour roulage à plat (1) selon l'une quelconque des revendications 1 à 3, dans lequel
la dureté du caoutchouc de la partie en caoutchouc renforcé intérieure (12), mesurée au moyen d'un duromètre de type A à 23 °C selon la norme JIS-K6253, est de 60 à 100 degrés,
la dureté du caoutchouc de la partie en caoutchouc renforcé extérieure (11), mesurée au moyen d'un duromètre de type A à 23 °C selon la norme JIS-K6253, n'est pas inférieure à 45 degrés et plus petite que la dureté du caoutchouc de la partie en caoutchouc renforcé extérieure (12), et la différence entre les deux est de 5 à 55 degrés.
